(19)

Europäisches
Patentamt
European
Patent Office
Office européen
des brevets

(11)    EP 1 976 750 B1

(12)    **EUROPEAN PATENT SPECIFICATION**

(45) Date of publication and mention
of the grant of the patent:
**23.03.2016   Bulletin 2016/12**

(51) Int Cl.:
***B63H 23/24*** *(2006.01)*        ***B63H 1/16*** *(2006.01)*

(21) Application number: **06843931.4**

(86) International application number:
**PCT/NO2006/000488**

(22) Date of filing: **19.12.2006**

(87) International publication number:
**WO 2007/084004 (26.07.2007 Gazette 2007/30)**

(54) **ASSEMBLY FOR REDUCING FRICTION LOSS IN A PROPELLER OR TURBINE IN A CURRENT OF WATER**

ANORDNUNG ZUR VERMINDERUNG VON REIBUNGSVERLUST IN EINEM PROPELLER ODER IN EINER TURBINE IN EINEM WASSERSTROM

ENSEMBLE PERMETTANT DE REDUIRE LA PERTE PAR FROTTEMENT DANS UNE HELICE OU UNE TURBINE DANS UN COURANT D'EAU

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.01.2006   NO 20060254**

(43) Date of publication of application:
**08.10.2008   Bulletin 2008/41**

(73) Proprietors:
• **Inpower AS**
  **6509 Kristiansund (NO)**
• **Brunvoll AS**
  **6415 Molde (NO)**

(72) Inventor: **SANDÖY, Normann**
**N-6409 Molde (NO)**

(74) Representative: **Curo AS**
**Industriveien 53**
**7080 Heimdal (NO)**

(56) References cited:
| | |
|---|---|
| **EP-A1- 0 425 723** | **EP-A1- 0 425 723** |
| **WO-A1-03/082669** | **DE-A1- 10 016 990** |
| **GB-A- 1 439 806** | **GB-A- 1 439 806** |
| **US-A- 3 499 412** | **US-A- 5 078 628** |
| **US-A- 5 607 329** | **US-A- 5 607 329** |
| **US-A1- 2003 036 319** | |

## Description

The invention relates to an assembly for use as a ship propeller or a turbine in a current of water, adapted for reduction of friction loss during operation.

## Background

Ship propeller assemblies or generator assemblies are known, which comprise a propeller element mounted in a surrounding rotor element, in the circumference of which permanent magnets or windings are mounted for the generation of magnetic fields. The rotor element constitutes the rotor of an electric motor and/or a generator, and is positioned on the inside of a surrounding stator element, which is provided with magnet devices or windings for the generation of magnetic fields for effecting rotation of the propeller element. By positioning such an assembly in a flowing medium, such as in a tube with flowing water, it can be utilized as an electric generator.

US patent publication 5,220,231 (Veronese et al.) shows such an arrangement for use as a propulsion unit for a sea-going vessel. This arrangement has a centrally supported propeller element, with propeller blades that extend radially between a central section and a radially outwardly positioned ring, and is a small radial distance from the stator element.

GB 1439806 which constitutes the closest prior art describes a marine propeller driven via an outer ring which is secured to the propeller blades and which rotates in bearings in a housing, where the propeller is driven by an electric motor comprising a stator and a squirrel cage rotor which is secured to the ring. Entry of water into the housing is prevented by seals and by the admission of compressed air through a pipe.

DE 100 16 990 describes a drive propeller for a ship, where compressed air is supplied to the intermediate space between the propeller and nozzle propeller is arranged in.

Between the rotating and stationary sections of such assemblies, there are gaps that get filled with the medium into which the assembly is lowered. When used as a ship propeller or generator, this medium will generally be water. When the rotable sections are rotated, friction forces arise in the medium in the gaps. This results in energy loss, which results in lower power efficiency when used as a propulsion unit, or less generated energy when used as a generator. The losses in a gap increase approximately as the third power of the peripheral velocity of the gap's inner, rotating surface relative to the outer stationary surface. Hence, at slow rotation the losses will be of less importance. Furthermore, the losses are linearly dependent on the density of the medium in the gap, as a higher density results in higher losses. Calculations have shown that the loss in a gap can be approximated to the following expression:

$$E \approx 0{,}00066 \ \pi DB \ \rho U^3$$

where $\pi DB$ is the area of the gap, $\rho$ is the density of the medium, and U is the linear velocity.

## Object

The object of the invention is to provide an assembly for use as a ship propeller or a generator, which is adapted for the reduction of friction losses resulting from rotation of the rotating parts of the assembly.

## The invention

The invention is stated in the independent claim 1. Advantageous embodiments appear from the independent claims.

The object of the invention is obtained with an assembly for use as a ship propeller or a generator, adapted to displace or replace liquid with gas in a gap, or gaps, between rotating and non-rotating sections. Such gas may preferably be air. Compared to a liquid, such as water, a gas, such as air, has a substantially lower density. Hence, the losses in a gas-filled gap will be substantially lower than the losses in a gap filled with liquid.

## Example of embodiment

An example of an embodiment according to the invention is given below. The embodiment shows an assembly according to the invention, for use as a ship propeller, which utilizes the inventive concept for the reduction of friction loss. The description of the example of an embodiment is made with reference to the drawings, in which

Fig. 1 is a perspective view of an assembly according to the invention, in the form of a ship propeller assembly that is centrally arranged and with an electric motor integrated about the circumference of the rotor section,

Fig. 2 is a front view of the ship propeller assembly in Fig. 1,

Fig. 3 is a cross section view of the assembly in Figs. 1 and 2, along the line A-A in Fig. 2, and

Fig. 4 is a section view of the cross section view in Fig. 3.

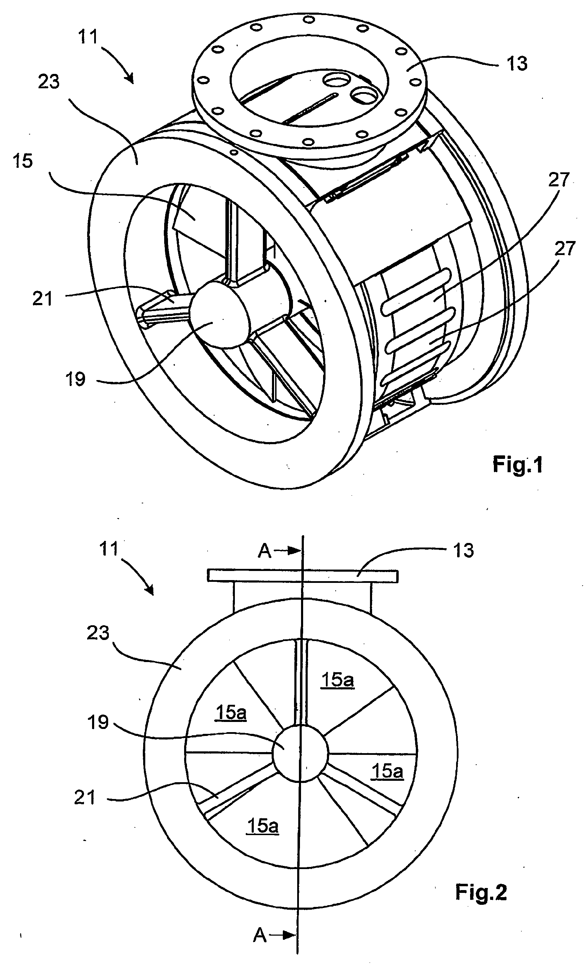

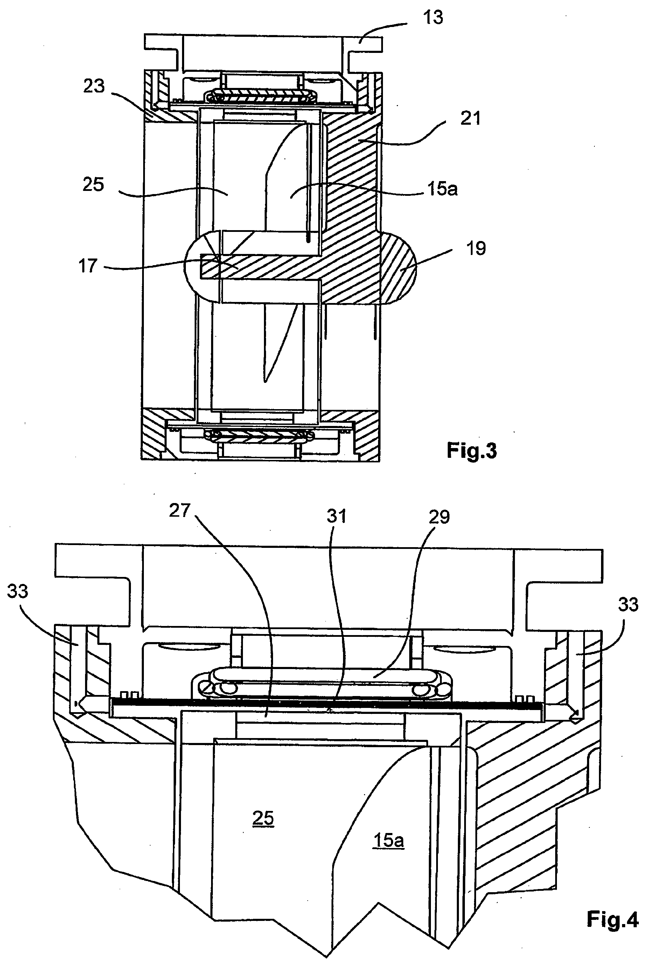

Fig. 1 shows a propeller assembly 11 that advantageously, for example, can be used as a tunnel thruster or a propulsion unit, mounted to a ship (not shown). In the upper part of the assembly 11, it has a fixing flange 13, for mounting to the ship. The propeller assembly 11 has essentially the shape of a short piece of pipe, with a propeller section 15 rotationally arranged with a central axle 17 (Fig. 3). The axle 17 is fixed to a central part 19 which is held in position by means of three supporting bars 21.

In Fig. 1, some external parts are partially removed, to make the inner parts visible.

Fig. 2 shows the assembly 11 in Fig. 1 from the front, along the longitudinal axis of the assembly 11. As can be seen in Fig. 2, the propeller section 15 comprises four propeller blades 15a. These extend substantially radially between the central axle 17 (Fig. 3) and a ring-shaped rotor part 25 (Fig. 3), which is arranged about the propeller section 15 and to which the propeller blades 15a are fixed. This is shown in Fig. 3, which is a cross sectional view of the assembly 11 along the line A-A in Fig. 2.

Fig. 4 is an enlarged sectional view of the upper part of the cross sectional view in Fig. 3. In Figs. 3 and 4, it is shown how the ring-shaped rotor part 25 is rotationally arranged within the stator part 23. A number of permanent magnets 27 are fixed to the outer periphery of the rotor part 25. The permanent magnets 27 are positioned a short distance from a plurality of windings 29 connected to the stator part 23, in such a way that magnetic fields for force application onto the magnets can be generated by the supply of electric current in the windings 29, for the controlled and regulated rotation of the rotor part 25, and hence also the propeller section 15.

Between the exterior surface of the rotor part 25 and the opposite inner surface of the stator part 23, there will be a gap 31 which will be filled with water when the assembly 11 is lowered into water. A typical gap width, i.e. the distance between an exterior surface of the rotor part 25 and an opposite inner surface of the stator part 23, can be in the range of 1-30 mm, but can also be larger or smaller.

For displacing the water in the gap 31, there are arranged gas channels 33 in the stator part 23, for delivery of gas, preferably air, to the gap 31. The gas can be delivered by means of application of overpressure in the gas channels 33, which pressure is greater than the pressure in the gap 31. The delivered gas will eventually run out of the gap and flow out together with the water flowing through. Figure 4 also show the use of two gas channels 33 in the stator part 23 supplying gas from two sides of the gap 31.

However, if the assembly 11 is not positioned too deep, the velocity of the flow of water through the assembly 11 will, at sufficiently fast rotation of the rotor part 25, establish under-pressure in the gap 31, whereby air will automatically be sucked into the gap 31 and replace the water. One will then advantageously avoid the need to supply pressurized air or gas. However, if the assembly 11 is used at deeper water depths, it is advantageous to supply the air or the gas by means of applied overpressure, to ensure that the gas does replace the water in the gap 31.

The density of water is about 1000 kg/ m$^3$ (somewhat higher for sea water than for fresh water). The density of air is about 1,2 kg/m$^3$, and even lower for high temperatures. As the losses due to friction forces in a gap are linearly dependant of the density, as mentioned, such losses will hence be reduced by a factor of about 800, when replacing the water in the gap with air. This constitutes a reduction to approximately zero loss in the gap, in relation to the starting point.

In experiments performed with a propeller assembly of 100 kW, the total loss in the assembly was about 30 kW. Of these losses of 30 kW, approximately 30 % can be ascribed to losses in the gap, as discussed herein. Hence, by replacing the water in the gap with air, it will be possible to reduce the losses in the assembly by approximately 30 %. In this case, that will be about 9 % of the total delivered power (30 % of 30 % loss).

The magnitude of the loss reduction will of course depend on the construction of the assembly and the rotational velocity, etc., and can thus vary a lot. Notwithstanding, it is evident that substantial loss reductions can be achieved with an assembly adapted according to the invention.

Typical periphery velocities for the rotating gap surface in relation to the stationary surface can be in the range of 30-60 m/s, but can also be higher or less.

The assembly according to the invention can also have another basic construction, for instance a periphery-arranged propeller or generator assembly, as known from the prior art, the gap(s) of which, between rotating and non-rotating parts are, according to the invention, filled with gas that displaces any liquid in the gaps.

## Claims

1. Assembly for use as ship propeller (11) or a turbine in a current of water, comprising a propeller section (15) with at least one propeller blade (15a), a rotor part (25) arranged about and co-rotating with the propeller section (15), which rotor part (25) in its periphery comprises magnet devices (27) or windings for the generation of magnetic fields, so that the rotor part (25) constitutes the rotor of an electric motor and/or generator, and further comprising a stator part (23) that surrounds the rotor part (25), which stator part (23) comprises magnet devices or windings (29) for generation of magnetic fields, wherein between exterior surface of the rotor part (25) and inner surface of the stator part (23) is at least one gap (31), and the assembly is adapted for the supply of gas in the at least one gap (31) between the rotor part (25) and the stator part (23), **characterized in that**

    - the gap (31) is open to surrounding water and will be filed with water when the assembly is lowered into water,

- at least one gas channel (33) is arranged in the stator part (23) for delivery of the gas to the at least one gap (31) for displacement of any liquid in the gap (31) for the reduction of frictional forces in the gap (31) during rotation of the rotor part (25) in relation to the stator part (23).

2. Assembly according to claim 1, **characterized in that** at least two gas channels (33) are arranged in the stator part (23) for delivery of gas to the at least one gap (31), by supplying gas from two sides of the gap (31).

3. Assembly according to claim 1 or 2, **characterized in that** it is adapted for the supply of gas in the form of air in the at least one gap (31).

4. Assembly according to claim 1, 2 or 3, **characterized in that** it is adapted for the supply of gas from a gas source with higher gas pressure than the pressure in the gap (31).

5. Assembly according to claim 1, 2 or 3, **characterized in that** it is adapted for the supply of gas by the formation of an under-pressure in the gap (31) in relation to the gas source, from the through-flow of the medium, such as water, into which the assembly is lowered.

6. Assembly according to any one of the preceding claims, **characterized in that** the assembly is a peripherally supported ship propeller assembly.

7. Assembly according to any one of the preceding claims, **characterized in that** the assembly is a centrally supported ship propeller assembly.

8. Assembly according to any one of the preceding claims, **characterized in that** it is adapted for rotation of the rotor part (25) with a peripheral velocity of up to 60 m/s in both directions of rotation.

9. Assembly according to any one of the preceding claims, **characterized in that** the gap thickness of the at least one gap (31) is between 1 and 30 mm.

**Patentansprüche**

1. Anordnung zur Verwendung als Schiffspropeller (11) oder eine Turbine in einem Wasserstrom, mit einem Propellerbereich (15) mit mindestens einem Propellerblatt (15a), einem Rotorteil (25), welches um den Propellerbereich (15) angeordnet ist und mit dem Propellerbereich (15) mitrotiert, wobei das Rotorteil (25) in seinem Umfang Magnetvorrichtungen (27) oder Wicklungen für die Erzeugung von Magnetfeldern aufweist, so dass das Rotorteil (25) den Rotor eines elektrischen Motors und/oder Generators darstellt, und ferner mit einem Statorteil (23), welches das Rotorteil (25) umgibt, wobei das Statorteil (23) Magnetvorrichtungen oder Wicklungen (29) zur Erzeugung von Magnetfeldern aufweist, wobei zwischen einer äußeren Oberfläche des Rotorteils (25) und einer inneren Oberfläche des Statorteils (23) mindestens ein Spalt (31) ist, und die Anordnung geeignet ist für die Zufuhr von Gas in den mindestens einen Spalt (31) zwischen dem Rotorteil (25) und dem Statorteil (23), **dadurch gekennzeichnet, dass**

- der Spalt (31) zu umgebendem Wasser offen ist und mit Wasser gefüllt wird, wenn die Anordnung in Wasser abgelassen ist,
- mindestens ein Gaskanal (33) in dem Statorteil (23) angeordnet ist zur Lieferung des Gases zu dem mindestens einen Spalt (31) zur Verdrängung jeglicher Flüssigkeit in dem Spalt (31) für die Reduktion von Reibungskräften in dem Spalt (31) während einer Rotation des Rotorteils (25) in Beziehung zu dem Statorteil (23).

2. Anordnung nach Anspruch 1, **dadurch gekennzeichnet, dass** mindestens zwei Gaskanäle (33) in dem Statorteil (23) angeordnet sind zur Lieferung von Gas zu dem mindestens einen Spalt (31), durch Zuführen von Gas von zwei Seiten des Spalts (31).

3. Anordnung nach Anspruch 1 oder 2, **dadurch gekennzeichnet, dass** sie geeignet ist für die Zufuhr von Gas in der Form von Luft in den mindestens einen Spalt (31).

4. Anordnung nach Anspruch 1, 2 oder 3, **dadurch gekennzeichnet, dass** sie geeignet ist für die Zufuhr von Gas, von einer Gasquelle mit höherem Gasdruck als der Druck in dem Spalt (31).

5. Anordnung nach Anspruch 1, 2 oder 3, **dadurch gekennzeichnet, dass** sie geeignet ist für die Zufuhr von Gas, durch die Ausbildung eines Unterdrucks in dem Spalt (31) im Verhältnis zu der Gasquelle, von dem Durchfluss des Mediums, beispielsweise Wasser, in welches die Anordnung abgelassen ist.

6. Anordnung nach einem der vorherigen Ansprüche, **dadurch gekennzeichnet, dass** die Anordnung eine umfangsgestützte Schiffspropelleranordnung ist.

7. Anordnung nach einem der vorherigen Ansprüche, **dadurch gekennzeichnet, dass**

die Anordnung eine zentralgestützte Schiffspropelleranordnung ist.

**8.** Anordnung nach einem der vorherigen Ansprüche, **dadurch gekennzeichnet, dass** sie geeignet ist zur Rotation des Rotorteils (25) mit einer Umfangsgeschwindigkeit von bis zu 60 m/s in beiden Rotationsrichtungen.

**9.** Anordnung nach einem der vorherigen Ansprüche, **dadurch gekennzeichnet, dass** die Spaltdicke des mindestens einen Spalts (31) zwischen 1 und 30 mm ist.

## Revendications

**1.** Ensemble destiné à être utilisé en tant qu'hélice (11) de bateau ou turbine dans un courant d'eau, comprenant une section d'hélice (15) avec au moins une pale d'hélice (15a), une partie de rotor (25) agencée autour et tournant conjointement avec la section d'hélice (15), laquelle partie de rotor (25) comprend, dans sa périphérie, des dispositifs (27) ou enroulements magnétiques pour la génération de champs magnétiques, de sorte que la partie de rotor (25) constitue le rotor d'un moteur électrique et/ou d'un générateur, et comprenant en outre une partie de stator (23) qui entoure la partie de rotor (25), laquelle partie de stator (23) comprend des dispositifs ou enroulements magnétiques (29) pour la génération de champs magnétiques, dans lequel entre une surface extérieure de la partie de rotor (25) et une surface interne de la partie de stator (23), on trouve au moins un espace (31) et l'ensemble est adapté pour l'amenée d'un gaz dans le au moins un espace (31) entre la partie de rotor (25) et la partie de stator (23), **caractérisé en ce que** :

l'espace (31) est ouvert par rapport à l'eau environnante et est rempli avec l'eau lorsque l'ensemble est abaissé dans l'eau, au moins un canal de gaz (33) est agencé dans la partie de stator (23) pour délivrer le gaz au au moins un espace (31) pour le déplacement de n'importe quel liquide dans l'espace (31) pour la réduction des forces de friction dans l'espace (31) pendant une rotation de la partie de rotor (25) par rapport à la partie de stator (23).

**2.** Ensemble selon la revendication 1, **caractérisé en ce qu'**au moins deux canaux de gaz (33) sont agencés dans la partie de stator (23) pour amener le gaz au au moins un espace (31), en alimentant en gaz depuis deux côtés de l'espace (31).

**3.** Ensemble selon la revendication 1 ou 2, **caractérisé en ce qu'**il est adapté pour l'alimentation en gaz sous la forme d'air dans le au moins un espace (31).

**4.** Ensemble selon la revendication 1, 2 ou 3, **caractérisé en ce qu'**il est adapté pour l'alimentation en gaz à partir d'une source de gaz avec une pression de gaz supérieure à la pression dans l'espace (31).

**5.** Ensemble selon la revendication 1, 2 ou 3, **caractérisé en ce qu'**il est adapté pour l'alimentation en gaz par la formation d'une sous-pression dans l'espace (31) par rapport à la source de gaz, à partir de l'écoulement du milieu, tel que l'eau, dans lequel l'ensemble est abaissé.

**6.** Ensemble selon l'une quelconque des revendications précédentes, **caractérisé en ce que** l'ensemble est un ensemble d'hélice de bateau supporté de manière périphérique.

**7.** Ensemble selon l'une quelconque des revendications précédentes, **caractérisé en ce que** l'ensemble est un ensemble d'hélice de bateau supporté de manière centrale.

**8.** Ensemble selon l'une quelconque des revendications précédentes, **caractérisé en ce qu'**il est adapté pour la rotation de la partie de rotor (25) avec une vitesse périphérique allant jusqu'à 60 m/s dans les deux directions de rotation.

**9.** Ensemble selon l'une quelconque des revendications précédentes, **caractérisé en ce que** l'épaisseur d'espace du au moins un espace (31) est comprise entre 1 et 30 mm.

**Fig.1**

**Fig.2**

**Fig.3**

**Fig.4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5220231 A, Veronese
- GB 1439806 A

- DE 10016990